# EUROPEAN PATENT SPECIFICATION

(11) **EP 1 126 942 B1**
(45) Date of publication and mention of the grant of the patent: **11.08.2004**
(21) Application number: 99949273.9
(22) Date of filing: 27.10.1999
(51) Int. Cl.: B23B 39/16, B23B 47/30

(54) **MECHANICAL HEAD FOR DRILLING OF HOLES OF A DIFFERENT DIAMETER WITHOUT AN EXCHANGE OF TOOLS**
MEHRSPINDELIGER BOHRKOPF MIT RADIAL VERSTELLBAREN SPINDELN
TETE MECANIQUE DE PERFORATION DE TROUS DE DIAMETRE DIFFERENT SANS AVOIR A CHANGER D'OUTIL

(30) Priority: 05.11.1998 HR 980579
(43) Date of publication of application: 29.08.2001
(73) Proprietor: Ivic, Stipan, 23211 Drage-Pakostane (HR)
(72) Inventor: Ivic, Stipan, 23211 Drage-Pakostane (HR)
(74) Representative: Lieck, Hans-Peter, Dipl.-Ing.
(86) International application number: PCT/HR1999/000025
(87) International publication number: WO 2000/027573

(56) References cited:
- DD-A- 213 608
- DE-A- 2 125 483
- FR-A- 2 515 555

## Description

The present invention relates to a multi-spindle drilling head according to the pre-characterizing portion of claim 1.

Such drilling heads are known, e.g. from DD 213 608 A and DE 2 125 483 A. In each case the drilling head is designed for attachment to a tool spindle of a stationary machine tool and defined for simultaneous drilling of a plurality of holes in a work piece. The number of such holes can be four or more. With any such drilling head the drilling of a plurality of holes is facilitated, the more so if the same pattern of holes occurs repeatedly.

On the other hand it is desirable to facilitate the drilling of individual holes of variable diameter in tiles or the like, without the work piece getting damaged by this process. Unless this work had been done by drilling a considerable number of relatively small holes along a circle previously drawn upon the work piece, then breaking out the interior part, e.g. using a hammer and chisel, and finally smoothing the outline of the hole thus obtained, different tools had to be used for each desired hole diameter, such as specific drills or cutting tools, often requiring specific machine tools for operation. All of this is cumbersome and time consuming.

This in mind, the invention as claimed aims at providing a drilling head suitable for drilling relatively large holes of variable diameter even in fragile materials, such as ceramic tiles, with a minimum of time and labour and without requiring an exchange of tools.

The invention provides a multi-spindle drilling head comprising the features of the pre-characterizing portion of claim 1 wherein, however, in contrast to the prior art, the tool spindle supports are supported by a rotating head portion so as to impart to the tool spindles a circular movement around a common center axis in addition to their rotation around their individual center axes. Accordingly, the tools attached to the individual tool spindles undergo a circular advance while performing a milling operation, such to produce a circular channel. The outside wall of this channel will finally define the hole to be made when the central portion will have broken away the moment the channel has become deep enough. Otherwise, where the hole to be made is not a through hole and where the material is soft enough, as e.g. wood or foamed plastic, the center of the circular channel can easily be removed.

Including the feature of claim 3, according to which the multi-spindle drilling head of the invention is self-centering, it can be used attached to a hand-held machine tool such as an ordinary electric drill gun. Otherwise it can well be employed like the conventional multi-spindle drilling heads in a stationary machine tool where the work piece is normally attached to a table thereof.

In contrast to the aforementioned prior art multi-spindle drilling heads, the tools to be used in that one of the present invention will be milling tools.

In the following a favorable embodiment of the invention is described in detail, taking reference to the annexed drawings. In these drawings
Fig. 1 is a longitudinal section of a multi-spindle drilling head according to an embodiment of the present invention, attached to an electric drill gun,

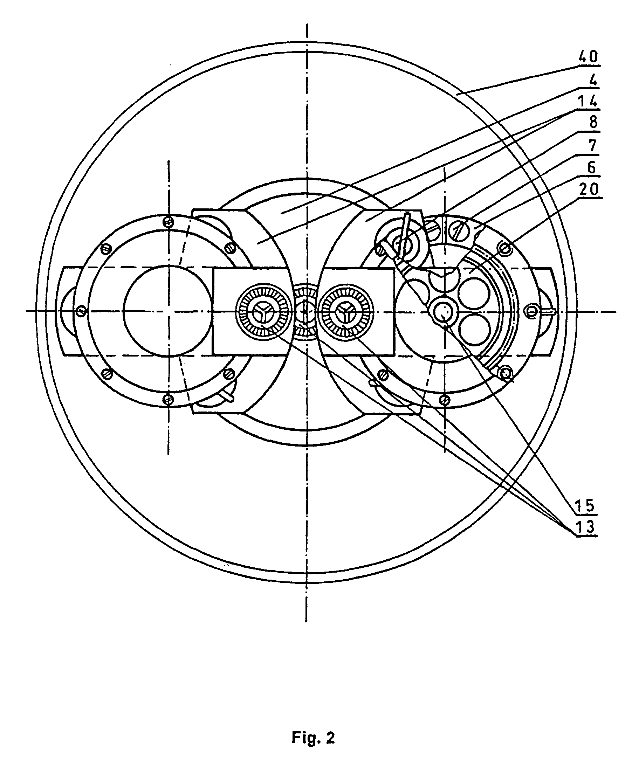

Fig. 2 is a top view of the same drilling head with a minor portion broken away,

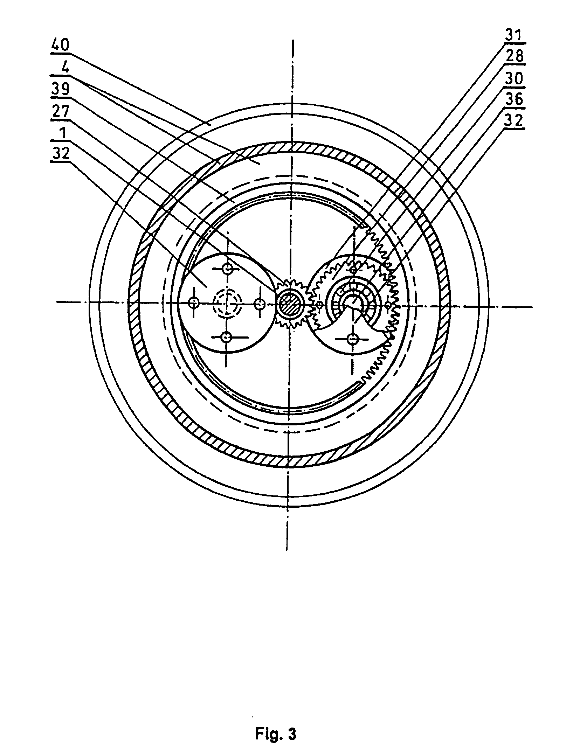

Fig. 3 is a cross section of the same drilling head according to the line A-A of Fig. 1,

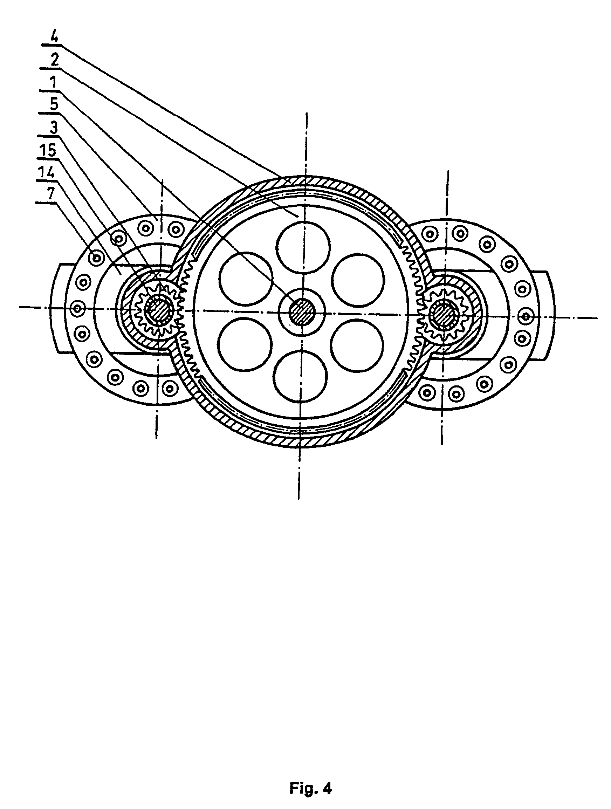

Fig. 4 is a cross section according to the line B-B of Fig. 1,

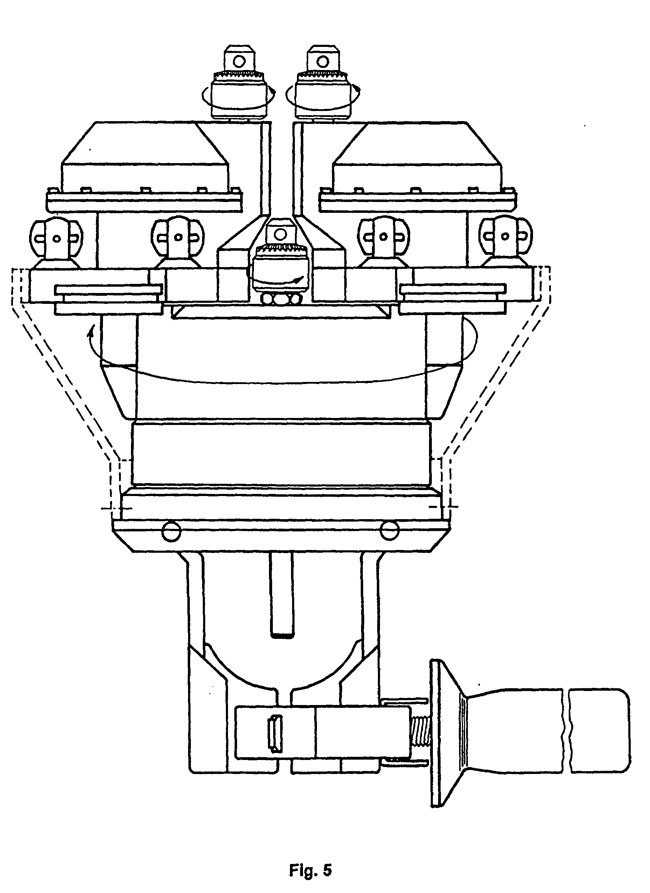

Fig. 5 is a side view of the same drilling head, an outward skirt portion thereof being shown only by dashed lines, and

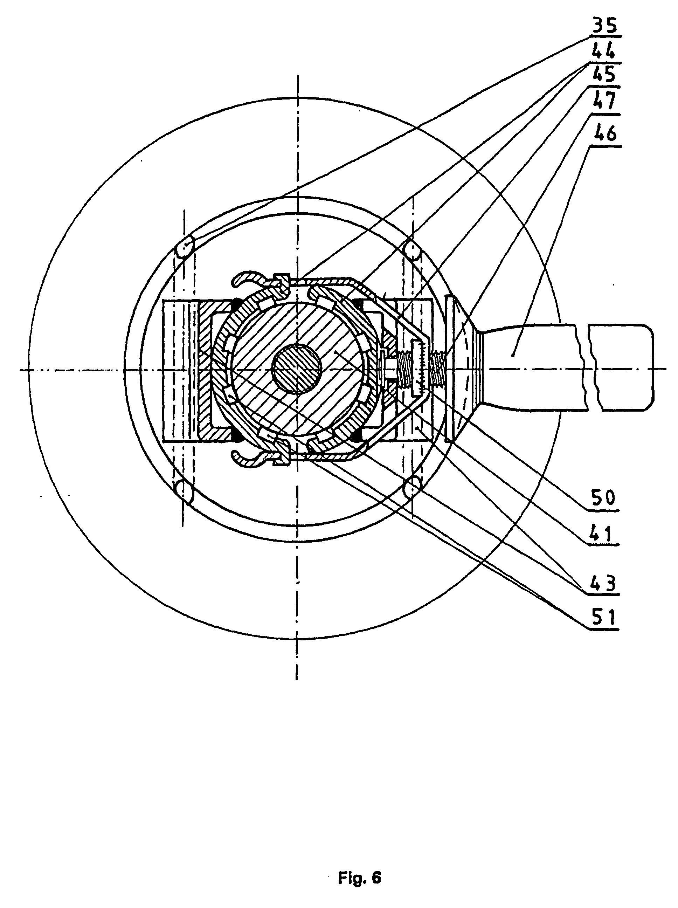

Fig. 6 is a cross section of the same drilling head along the line C-C of Fig. 1.

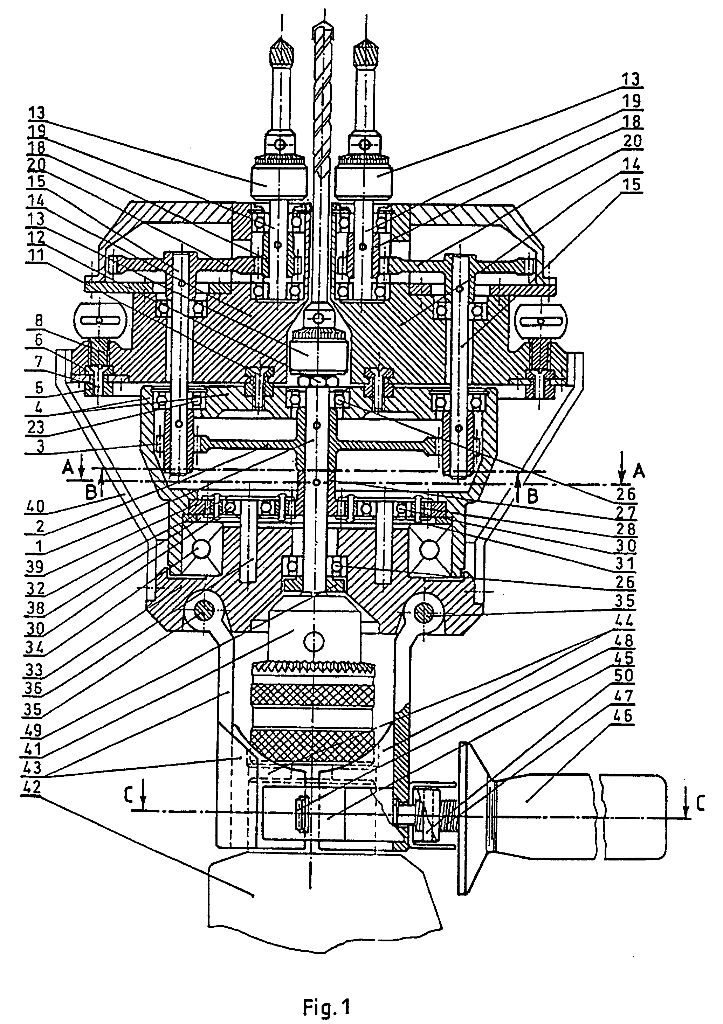

According to Fig. 1 a central spindle (main driving spindle 1) is connected by means of a chuck (41) of the electric starter (drill gun) 42 transmits the rotating power to the bore chuck 13, the main gear 2 and the sun wheel 27. As it has been already said in the exposition of the essence of the invention, the function of chuck 13 placed on the upper end of the central spindle is to bore out a hole and to keep the central position. Around the central position two main lateral bores will cut out (bore out) a hole of the desired diameter. This chuck 13 is placed at the lowest spot near the body of the rotating head portion (bell) 4.

The main driving spindle 1 on both sides, over spur- gear 3 and pivot axis 15 with spur- gears 20 transmits revolutions to tool spindle 19 which carry firmly attached pinions 18. These pinions placed all on their spindles, are situated in the body of the tool spindle supports 14.

Two upper lateral chucks 13 are attached to the ends of tool spindle 19 and on the upper parts of tool spindle supports 14.

These tool spindle supports 14 with all of their elements can rotate for 360° when bolt 8 is slacked off over slip rings 5 and 6, around pivot axis 15 and the spur gears 20 and pinions 18. When the tool spindle supports are equally twisted in opposite directions their axis are drawing nearer or separating. By fixing each tool spindle support with bolts 8 we get the schedule of bores which are ready to cut out a hole of a diameter. The diameter is conditioned by the distance of lateral bores from the central bore.

Owing to tool chucks which are rotating even around their axes, and then all of them together around the axis of the central chuck, the exact fixing of these tool spindle supports 14 on an equal distance from the central bore has been done by the inscription of a numerical indication on sliding ring 5 and 6.

Sun wheel 27 in distinction from main gear 2 (its function has already been described) has a completely different function although it is fixed to the same main driving spindle 1.

On drawing 3, section A-A and on drawing 1, it is easy to see the function and arrangement of elements which are helping the body of the rotating head portion and the tool spindle supports together with chucks to rotate around the axis of the main driving spindle, but in the opposite direction. Sun wheel 27 when getting rotation from main driving spindle 1 over planet pinions 28 is starting the big internally toothed ring gear 39. This big ring gear is firmly fixed into the body of the rotating head portion 4, so that the body rotates around the axis of central main driving spindle 1., too.

For all this to happen it is important to explain that the planet pinions covered with tin caps 31 and 32 are placed on both sides over the bearing on their small static shafts 35. Said static shafts 36 are firmly pressed into the body of the stationary head portion 33 which over the axial-radial bearing 34 closes the bottom side of the rotating head portion drawing 1. Tin caps 31 and 32 are fixed by means of rivets over gears, so that the cap ends interlock the surface of neighbouring sun wheel 27 and gear ring 39. The planet pinions 28 by means of these caps 31 and 32 and after the taking out of shafts 36 and the stationary head portion 33 remain on their places or could be easily taken back into this position.

The body of the rotating head portion 4 and its stationary head portion 33 over the axial-radial bearing 34 is keeping main driving spindle 1 engaged by means of nut 12 on the upper side and the fixed ring 49 on the bottom side over bearing 26.

In order to have a better idea of this invention it is necessary to mention sliding rings 5 and 6.

Sliding rings 5 are partly leaned against the body (bell) of rotating head portion 4 and with screws 11 firmly screwed to the body of the rotating head portion.

Sliding rings 6 are by means of screws 7 and screws 11 firmly screwed on the sliding rings 5. Their function by their shape and profile is to accept the circular spacing of lateral chucks as well as the alignment and firm holding of tool spindle supports 14 over themselves. It is important to remember that they are enduring all loadings appearing during the cutting of holes when this mechanism is being used.

Protective plate 40 is made of artifical glass and its function is to protect the body from rotating parts of this rotating mechanical head.

From this aspect on, this invention represents a very useful and economical apparatus that could be produced without any problems, easily and economically because of its symmetry. The embodiment of the invention as shown on the drawings is designed for use as an easily transferable tool. If a desk as the one for drilling machines is being used and this mechanism fixed to such a desk, all the above mentioned drillings could be performed, but without the central bore since the central position is kept by the column to which this mechanism would be fixed.

## Claims

1. A multi-spindle drilling head comprising
- a stationary head portion (33),
- a main driving spindle (1) centrally extending into said stationary head portion (33)
- a plurality of congruent tool spindle supports (14) pivotally adjustable around pivot axes (15) eccentrically in parallel to said main driving spindle (1),
- a tool spindle (19) rotatably supported in each of said tool spindle supports (14) in parallel to said main driving spindle (1), said tool spindles being in gear train connection with said main driving spindle,
**characterized in that** the number of tool spindle supports (14) is two and that said tool spindle supports (14) are supported by a rotating head portion (4) itself rotatably supported by said stationary head portion (33) and coaxial with and driven from said main driving spindle (1), so as to impart to said tool spindles (19) a circular movement around said main driving spindle in addition to their rotation around their own center axes.

2. The drilling head of claim 1 **characterized in that** said main driving spindle (1) at the same time forms a drill spindle for receiving a centering drill.

3. The drilling head of any one of the preceding claims,
**characterized in that** said tool spindles (19) and/or said drill spindle are provided with chucks (13) for receiving the respective tools or drill.

4. The drilling head of any one of the preceding claims,
**characterized in that** said stationary head portion (33) is bell-shaped and said rotating head portion (4) is arranged substantially inside the open end thereof.

5. The drilling head of any one of the preceding claims,
**characterized in** said it is adapted to be attached to a portable machine tool such as a drill gun (42).

6. The drilling head of claim 5, **characterized in that** said main driving spindle (1) has an outward end adapted to be received by a drill gun chuck (41) and said stationary head portion (33) comprises clamping means (44 - 50) adapted for attachment to the neck of the respective drill gun (42) or the like.

7. The drilling head of any one of the preceding claims,
**characterized in that** it is adapted to be attached to a stationary machine tool having a table, such as a stationary drilling machine.

8. The drilling head of any one of the preceding claims,
**characterized in that** said tool spindle supports (14) are substantially circular in plan view and pivotally supported by said rotating head portion (4) by means of sliding rings (5,6) concentric to the pivot axis (15) of each of said tool spindle supports.

9. The drilling head of any one of the preceding claims,
**characterized in that** said rotating head portion (4) is driven by a planetary gearing (27, 28, 39), the sun wheel (27) thereof being fixed on said main driving spindle (1) and the ring gear (39) being fixed to the rotating head portion whereas the planet pinions (28) are supported by said stationary head portion (33)

10. The drilling head of any one of the preceding claims,
**characterized in that** said gear train driving said tool spindles (19) comprises a main gear (2) on said main driving spindle (1), meshing with spur-gears (3) on one end of a rotatably supported physical pivot axis (15) of each of said tool spindle supports (14) and an additional spur-gear (20) on the other end of each of said physical pivot axes meshing with a pinion (18) on the respective tool spindle.

## Patentansprüche

1. Mehrspindelbohrkopf, mit:
- einem feststehenden Kopfabschnitt (33);
- einer Hauptantriebsspindel (1), die sich mittig in den feststehenden Kopfabschnitt (33) erstreckt;
- mehreren kongruenten Werkzeugspindelhalterungen (14), die um Drehachsen (15) herum verdrehbar sind, die zu der Hauptantriebsspindel (1) exzentrisch parallel sind,
- einer Werkzeugspindel (19), die parallel zu der Hauptantriebsspindel (1) in jeder der Werkzeugspindelhalterungen (14) drehbar gelagert ist, wobei die Werkzeugspindeln mit der Hauptantriebsspindel über einen Zahnradsatz in Verbindung stehen;
**dadurch gekennzeichnet, dass** die Zahl der Werkzeugspindelhalterungen (14) zwei ist und dass die Werkzeugspindelhalterungen (14) auf einem sich drehenden Kopfabschnitt (4) gelagert sind, der selbst auf dem feststehenden Kopfabschnitt (33) drehbar gelagert ist und mit der Hauptantriebsspindel (1) koaxial ist und von dieser angetrieben wird, um die Werkzeugspindeln (19) zusätzlich zu ihrer Drehung um ihre eigenen Mittelachsen in eine Kreisbewegung um die Hauptantriebsspindel herum zu versetzen.

2. Bohrkopf nach Anspruch 1, **dadurch gekennzeichnet, dass** die Hauptantriebsspindel (1) gleichzeitig eine Bohrspindel zur Aufnahme eines Zentrierbohrers bildet.

3. Bohrkopf nach einem der vorhergehenden Ansprüche, **dadurch gekennzeichnet, dass** die Werkzeugspindeln (19) und/oder die Bohrspindel mit Spannfuttern (13) zur Aufnahme der jeweiligen Werkzeuge oder des Bohrers versehen sind.

4. Bohrkopf nach einem der vorhergehenden Ansprüche, **dadurch gekennzeichnet, dass** der feststehende Kopfabschnitt (33) glockenförmig ist und der sich drehende Kopfabschnitt (4) im Wesentlichen in dessen offenem Ende angeordnet ist.

5. Bohrkopf nach einem der vorhergehenden Ansprüche, **dadurch gekennzeichnet, dass** er an einer tragbaren Werkzeugmaschine wie zum Beispiel einer Handbohrmaschine (42) befestigt werden kann.

6. Bohrkopf nach Anspruch 5, **dadurch gekennzeichnet, dass** die Hauptantriebsspindel (1) ein äußeres Ende hat, das von einem Handbohrmaschinenfutter (41) aufgenommen werden kann, und der feststehende Kopfabschnitt (33) Klemmmittel (44-50) umfasst, die am Hals der jeweiligen Handbohrmaschine (42) oder dergleichen befestigt werden können.

7. Bohrkopf nach einem der vorhergehenden Ansprüche, **dadurch gekennzeichnet, dass** er an einer feststehenden Werkzeugmaschine mit einem Tisch, wie zum Beispiel einer feststehenden Bohrmaschine, befestigt werden kann.

8. Bohrkopf nach einem der vorhergehenden Ansprüche, **dadurch gekennzeichnet, dass** die Werkzeugspindelhalterungen (14) in Draufsicht im Wesentlichen kreisrund sind und mit Hilfe von Gleitringen (5, 6), die zu der Drehachse (15) einer jeden der Werkzeugspindelhalterungen konzentrisch sind, auf dem sich drehenden Kopfabschnitt (4) drehbar gelagert sind.

9. Bohrkopf nach einem der vorhergehenden Ansprüche, **dadurch gekennzeichnet, dass** der sich drehende Kopfabschnitt (4) durch ein Planetengetriebe (27, 28, 39) angetrieben wird, dessen Sonnenrad (27) an der Hauptantriebsspindel (1) befestigt ist und dessen Hohlrad (39) an dem sich drehenden Kopfabschnitt befestigt ist, während die Planetenritzel (28) auf dem feststehenden Kopfabschnitt (33) gelagert sind.

10. Bohrkopf nach einem der vorhergehenden Ansprüche, **dadurch gekennzeichnet, dass** der die Werkzeugspindeln (19) antreibende Zahnradsatz ein Hauptzahnrad (2) auf der Hauptantriebsspindel (1) aufweist, das mit Stirnrädern (3) an einem Ende einer drehbar gelagerten physischen Drehachse (15) einer jeden der Werkzeugspindelhalterungen (14) in Eingriff steht, wobei ein zusätzliches Stirnrad (20) am anderen Ende einer jeden der physischen Drehachsen mit einem Ritzel (18) an der jeweiligen Werkzeugspindel in Eingriff steht.

## Revendications

1. Tête de perçage multibroche comprenant:
- une partie supérieure fixe (33),
- une broche d'entraînement principale (1) s'étendant au centre de ladite partie supérieure fixe (33),
- une pluralité de supports de broches outils convergents (14) ajustables de façon pivotante autour des axes de pivot (15) qui sont excentrés et parallèles à ladite broche d'entraînement principale (1),
- une broche outil (19) soutenue de façon rotative dans chacun desdits supports de broches outils (14) parallèle à ladite broche d'entraînement principale (1), lesdites broches outils étant reliées par un train d'engrenages à ladite broche d'entraînement,
**caractérisée en ce que** les supports de broches outils (14) sont au nombre de deux et **en ce que** lesdits supports de broches outils (14) sont soutenus par une partie supérieure rotative (4), elle-même soutenue de façon rotative par ladite partie supérieure fixe (33), coaxiale à et entraînée à partir de ladite broche d'entraînement principale (1) afin de communiquer auxdites broches outils (19) un mouvement circulaire autour de ladite broche d'entraînement principale outre leur rotation autour de leurs propres axes centraux.

2. Tête de perçage selon la revendication 1 **caractérisée en ce que** ladite broche d'entraînement principale (1) forme en même temps une broche de perçage destinée à recevoir un foret de centrage.

3. Tête de perçage selon l'une quelconque des revendications précédentes, **caractérisée en ce que** lesdites broches outils (19) et/ou ladite broche de perçage sont pourvues de mandrins (13) destinés à recevoir les outils ou le foret respectifs.

4. Tête de perçage selon l'une quelconque des revendications précédentes, **caractérisée en ce que** ladite partie supérieure fixe (33) est en forme de cloche et que ladite partie supérieure rotative (4) est sensiblement disposée à l'intérieur de l'extrémité ouverte de celle-ci.

5. Tête de perçage selon l'une quelconque des revendications précédentes, **caractérisée en ce qu'**elle est adaptée pour être fixée sur une machine-outil portative telle qu'une perceuse portative (42).

6. Tête de perçage selon la revendication 5, **caractérisée en ce que** ladite broche d'entraînement principale (1) dispose d'une extrémité externe adaptée pour être reçue par un mandrin de perceuse portative (41) et **en ce que** ladite partie supérieure fixe (33) comprend des moyens de serrage (44 - 50) adaptés pour être fixés au collet de la perceuse portative (42) ou similaires.

7. Tête de perçage selon l'une quelconque des revendications précédentes, **caractérisée en ce qu'**elle est adaptée pour être fixée sur une machine outil fixe disposant d'une table, telle qu'une machine à percer fixe.

8. Tête de perçage selon l'une quelconque des revendications précédentes, **caractérisée en ce que** lesdits supports de broches outils (14) sont sensiblement circulaires dans une vue en plan et soutenus de façon pivotante par ladite partie supérieure rotative (4) au moyen de bagues de blocage (5, 6) concentriques par rapport à l'axe de pivot (15) de chacun desdits supports de broches outils.

9. Tête de perçage selon l'une quelconque des revendications précédentes, **caractérisée en ce que** ladite partie supérieure rotative (4) est entraînée par un engrenage planétaire (27, 28, 39), la roue solaire (27) de celui-ci étant fixée sur ladite broche d'entraînement principale (1) et la couronne de train planétaire (39) étant fixée sur la partie supérieure rotative alors que les pignons satellites (28) sont soutenus par ladite partie supérieure fixe (33).

10. Tête de perçage selon l'une quelconque des revendications précédentes, **caractérisée en ce que** ledit train d'engrenages entraînant lesdites broches outils (19) comprend un engrenage principal (2) sur ladite broche d'entraînement principale (1), engrené avec des engrenages droits (3) sur une extrémité d'un axe de pivot physique soutenu de façon rotative (15) de chacun desdits supports de broches outils (14) et un engrenage droit supplémentaire (20) sur l'autre extrémité de chacun desdits axes de pivot physiques engrené avec un pignon (18) sur la broche outil respective.
